(19) Europäisches Patentamt
European Patent Office
Office européen des brevets

(11) Veröffentlichungsnummer: **0 512 320 A1**

(12) # EUROPÄISCHE PATENTANMELDUNG

(21) Anmeldenummer: **92106850.8**

(51) Int. Cl.5: **C09B 67/24**

(22) Anmeldetag: **22.04.92**

(30) Priorität: **04.05.91 DE 4114587**

(43) Veröffentlichungstag der Anmeldung:
**11.11.92 Patentblatt 92/46**

(84) Benannte Vertragsstaaten:
**CH DE FR GB LI**

(71) Anmelder: **BAYER AG**
**W-5090 Leverkusen 1 Bayerwerk(DE)**

(72) Erfinder: **Stawitz, Josef-Walter, Dr.**
**Am Hagen 1**
**W-5068 Odenthal(DE)**
Erfinder: **Stöhr, Frank-Michael, Dr.**
**Am Thelen Siefen 10**
**W-5068 Odenthal(DE)**
Erfinder: **Wolff, Joachim, Dr.**
**Schlinghovener Strasse 38**
**W-5068 Odenthal(DE)**

(54) **Feste Farbstoffpräparationen mit verbesserter Wasserlöslichkeit.**

(57) Feste Farbstoffpräparationen von reaktiven Phthalocyaninfarbstoffen der Formel

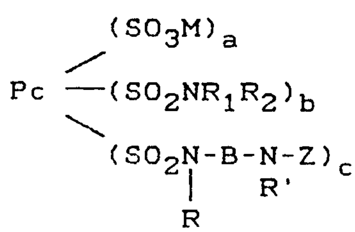

worin die Substituenten die in der Beschreibung angegebene Bedeutung haben, besitzen eine verbesserte Löslichkeit in Wasser, wenn sie 5 bis 15 Gew.-% eines säurebindenden Mittels enthalten.

EP 0 512 320 A1

Die Erfindung betrifft feste Farbstoffpräparationen von reaktiven Phthalocyaninen mit verbesserter Löslichkeit in Wasser, Farbstoffpräparationen können in fester oder in flüssiger Form vorliegen. Aus der EP-A-217 217 sind beispielsweise flüssige Präparationen von Reaktivfarbstoffen bekannt, wobei Phthalocyanine erwähnt werden, Die EP-A-59 782 bezieht sich auf ein Verfahren zur Herstellung konzentrierter wässriger Farbstoffpräparate, wobei Phthalocyanine ausdrücklich angegeben werden, siehe Beispiel 14. Es ist weiterhin aus der US-A-4 802 888 bekannt, die Wasserlöslichkeit von anionischen Farbstoffen zu verbessern, indem ein Chelatbildner und eine Lewis-Base in einer derartigen Menge verwendet werden, daß beim Auflösen der Präparation in Wasser ein pH-Wert von 7 bis 10 erreicht wird. In der US-A-4 802 888 werden Phthalocyaninfarbstoffe aber nicht erwähnt.

Der vorliegenden Erfindung liegt die Aufgabe zugrunde, hinsichtlich ihrer Handhabbarkeit und Stabilität verbesserte feste Farbstoffpräparationen von reaktiven Phthalocyaninfarbstoffen zur Verfügung zu stellen.

Die Erfindung betrifft feste Präparationen von Reaktivfarbstoffen der Formel

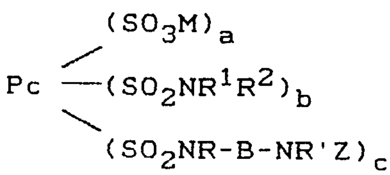

(I)

worin

Pc = Rest eines Kupfer- oder Nickelphthalocyanins

$R^1$, $R^2$ = H, gegebenenfalls substituiertes $C_1$-$C_4$-Alkyl oder zusammen gegebenenfalls wenigstens ein oder mehrere Heteroatome enthaltender 5-oder 6-Ring

R', R = H, gegebenenfalls substituiertes Alkyl,

B = Brückenglied, gegebenenfalls substituiertes oder durch wenigstens ein Heteroatom unterbrochenes $C_1$-$C_6$-Alkylen oder gegebenenfalls substituiertes Phenylen

a = 1,0 bis 3,0, vorzugsweise 1,8 bis 2,7

b = 0 bis 1,2

c = 0,5 bis 2,0, vorzugsweise 1,0 bis 1,5

M = H, $NH_4$, Li, Na,K

Z = heterocyclischer Rest,

wobei die Reste $R^1$ und $R^2$ sowie R und R' unabhängig voneinander die angegebene Bedeutung besitzen, dadurch gekennzeichnet, daß die Präparationen 5 bis 15 Gew.-% eines säurebindenden Mittels enthalten.

In einer bevorzugten Ausführungsform handelt es sich bei dem säurebindenen Mittel um LiOH, NaOH, KOH, $Li_2CO_3$, $Na_2CO_3$ oder $K_2CO_3$, wobei $Na_2CO_3$ besonders bevorzugt ist.

Die neuen Farbstoffpräparationen können wie folgt hergestellt werden:

a) Der Farbstoff wird nach seiner Herstellung aus der Reaktionsbrühe durch Zugabe von Salzen ausgefällt, isoliert, getrocknet und gemahlen. Anschließend wird mit Einstellmittel, Entstaubungsmittel und säurebindendem Mittel gemischt.

b) Der Farbstoff wird aus der Reaktionsbrühe durch Zusatz von Säure gefällt, isoliert und in Wasser angeschlagen. Dann wird das säurebindende Mittel zugesetzt, die Farbstofflösung der Druckpermeation unterworfen, wobei aufkonzentriert und entsalzt wird und schließlich unter Zusatz von Stellmittel sprühgetrocknet.

c) wie a), aber durch Druckpermeation entsalzt

d) wie b), aber ohne Druckpermeation sprühgetrocknet.

Farbstoffe der Formel I sind beispielsweise aus DE-A 1 644 681 und DE-A 3 843 558 bekannt.

In einer besonders bevorzugten Ausführungsform werden bei den beanspruchten festen Farbstoffpräparationen solche Chelatbildner, wie sie z.B. gemäß der US-A 4 802 888 erforderlich sind, nicht eingesetzt.

Vor und/oder nach dem Trocknen können übliche Einstellmittel untergemischt werden. Die Trocknung kann zum Beispiel in einem Umluftschrank, mit einem Schaufeltrockner oder Walzentrockner, bevorzugt jedoch durch Sprühtrocknung mit einer Ein- oder Zweistoffdüse oder Zerstäuberscheibe erfolgen. Die Konzentration der Feststoffe in Wasser beträgt bei der Sprühtrocknung üblicherweise 10 bis 45 Gew.-%.

Unter heterocyclischen Reaktivresten in der Formel (I) werden solche verstanden, die eine oder mehrere reaktive Gruppen oder abspaltbare Substituenten aufweisen, welche beim Aufbringen der Farbstoffe auf Cellulosematerialien in Gegenwart säurebindender Mittel, gegebenenfalls unter Einwirkung von Wärme mit den Hydroxylgruppen der Cellulose oder beim Aufbringen auf Superpolyamidfasern, wie Wolle,

mit den NH-Gruppen dieser Fasern unter Ausbildung kovalenter Bindungen zu reagieren vermögen.

Geeignete Reaktivgruppen, welche mindestens einen abspaltbaren Substituenten an einen heterocyclischen Rest gebunden enthalten, sind unter anderem solche, die mindestens einen reaktiven Substituenten an einen 5- oder 6-gliedrigen heteocylischen Ring gebunden enthalten, wie an einen Monazin-, Diazin-, Triazin-, z.B. Pyridin-, Pyrimidin-, Pyridazin-, Thiazin-, Oxazin- oder asymmetrischen oder symmetrischen Triazinring, oder an ein derartiges Ringsystem, welches einen oder mehrere ankondensierte Ringe aufweist, wie ein Chinolin-, Phthalazin, Cinnolin-, Chinazolin-, Chinoxalin-, Acridin-, Phenazin- und Phenanthridin-Ringsystem; die 5- oder 6-gliedrigen heterocyclischen Ringe, welche mindestens einen reaktiven Substituenten aufweisen, sind demnach bevorzugt solche, die ein oder mehrere Stickstoffatome enthalten und 5- oder bevorzugt 6-gliedrige carbocylische Ringe ankondensiert enthalten können.

Unter den reaktiven Substituenten am Heterocyclus sind beispielsweise zu erwähnen:
Halogen (Cl, Br oder F), Azido-($N_3$), Rhodanido, Thio, Thiolether, Oxyether.

Bevorzugt sind im Fall der vorliegenden Erfindung Reaktivfarbstoffe mit Reaktivgruppen auf Basis folgender Systeme:
Mono- oder Dihalogen-symmetrische Triazinylreste, Mono-, Di- oder Trihalogenpyrmidinylreste.

Als konzentrationserhöhende Zusatzstoffe bei der Herstellung der Präparationen können z.B. Verwendung finden: niedere aliphatische oder cyclische Amide wie $\epsilon$-Caprolactam, und/oder schwefelhaltige Verbindungen wie Dimethylsulfon, Diethylsulfon und/oder hydrotrope Verbindungen wie Thioharnstoff, Harnstoff, sowie die dazu gehörigen Derivate, besonders bevorzugt N,N'-Dimethylharnstoff.

Als säurebindende Mittel kommen vorzugsweise Alkalien wie $Na_2CO_3$, $K_2CO_3$, LiOH, $Li_2CO_3$, insbesondere aber LiOH und $Na_2CO_3$ in Frage. Mit Hilfe der säurebindenden Mittel wird bevorzugt auf pH 9,5 - 10,5 eingestellt.

Als übliche Einstellmittel kommen feste Verbindungen in Frage, die keine Reaktion mit der Reaktivgruppe eingehen wie z.B. anorganische Salze, besonders bevorzugt LiCl, $Li_2SO_4$ oder Polyphosphate, vorzugsweise aber Nichtelektrolyte wie Polyvinylpyrrolidon, Harnstoff, Salze wasserlöslicher aromatischer Sulfonsäuren wie Benzolsulfonsäure und anionische Dispergiermittel wie sulfatierte primäre oder sekundäre aliphatische Alkohole mit 10 bis 18 Kohlenstoffatomen, sulfatierte Fettsäureamide, sulfatierte Alkylenoxydaddukte, sulfatierte partiell veresterte mehrwertige Alkohole, und vor allem Sulfonate, wie langkettige Alkylsulfonate, beispielsweise Laurylsulfonate, Cetylsulfonat, Stearylsulfonat, Mersolate, Natriumdialkylsulfosuccinate, wie Natriumdioctylsulfosuccinat, Tauride, beispielsweise Oleylmethyltaurid (Natriumsalz), Alkylarylsulfonate, wie Alkylbenzolsulfonate mit gradkettiger oder verzweigter Alkylkette mit 7 bis 20 Kohlenstoffatomen, und Mono- und Dialkylnaphthalinsulfonate, wie Nonylbenzolsulfonat, Dodecylbenzolsulfonat und Hexadecylbenzolsulfonat, sowie 2-Isopropylnaphthalin-2-sulfonat, Di-iso-propylnaphthalinsulfonat, Di-n-butyl-naphthalinsulfonat, Diisobutylnapthalinsulfonat und insbesondere Kondensationsprodukte aus aromatischen Sulfonsäuren und Formaldehyd wie Naphthalinsulfonsäure, Ditolylethersulfonsäuren oder Terphenylsulfonsäure mit Formaldehyd und/oder Kondensationsprodukte aus Cyclohexanon, Formaldehyd und Bisulfit und/oder Ligninsulfonate. Weiterhin können noch übliche Entstaubungsmittel wie Öle, Öl/Emulgator-Mischungen oder Phthalsäureester zugesetzt werden.

Die nach dem erfindungsgemäßen Verfahren hergestellten Präparationen von Reaktivfarbstoffen haben vorzugsweise folgende Zusammensetzung:
Der Reaktivfarbstoffgehalt in der erfindungsgemäß hergestellten Präparation liegt bei 20-80 Gew.-% (bevorzugt 30-70 Gew.-%); außerdem enthält die Einstellung 5-15 % Alkalihydroxid oder -carbonat für den pH-Wert 9-11, weiterhin gegebenenfalls 10-60 % eines konzentrationserhöhenden Zusatzstoffes, 0-50 % der üblichen Einstellmittel bzw. Mischungen davon, sowie bis zu 4 % Entstaubungsmittel.

Die Löslichkeit von Reaktivfarbstoffen, insbesondere in Gegenwart von Elektrolyten, spielt eine erhebliche Rolle bei modernen Färbeverfahren.

Gegenstand der Erfindung ist weiterhin die Verwendung der auf diese Art hergestellten Präparationen der Reaktivfarbstoffe mit ausgezeichneter Löslichkeit zur Zubereitung von Färbebädern und Druckpasten für die Anwendung auf natürlichen und synthetischen Substraten, insbesondere Baumwolle, Wolle, Regeneratcellulose, Papier und Leder.

Die Einstellmittel werden bevorzugt vor dem Trocknen zugesetzt, können aber auch nach der Trocknung mit dem Farbstoff gemahlen und gemischt oder dem gemahlenen Farbstoff zugesetzt werden.

Die erfindungsgemäß hergestellten Präparationen zeichnen sich durch eine ausgezeichnete Löslichkeit in heißem und kalten Wasser aus.

Beispiel 1

Durch Pulvern und Vermischen von

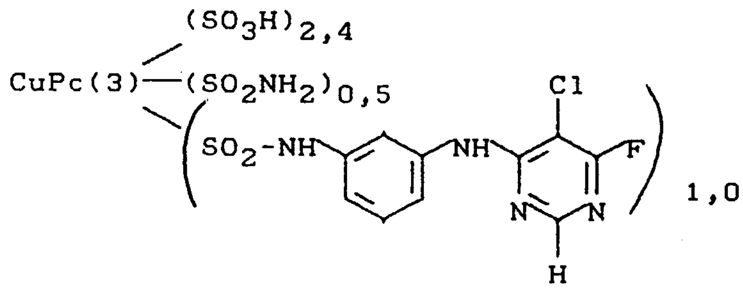

I)

| | |
|---|---|
| 10,0 g | des salzfreien Farbstoffs der Formel I) |
| 3,0 g | Natriumchlorid |
| 2,0 g | calc. Natriumcarbonat und |
| 5,0 g | eines Stellmittels (Naphthalinsulfonat) |

erhält man eine feste Farbstoffpräparation, die sich in Wasser gut löst und dabei einen pH von 9,8 aufweist.

Im Vergleich zu üblichen Pulvereinstellungen besitzt sie wesentlich verbesserte Lösungseigenschaften, insbesondere in Gegenwart von Elektrolyten.

| | Beispiel 1 | Vergleich ohne Zusatz von $Na_2CO_3$ |
|---|---|---|
| Löslichkeit bei 40° C mit 50 g/l $Na_2SO_4$ | > 40 g/l | 1 g/l |
| Löslichkeit bei 40° C mit 50 g/l NaCl | > 30 g/l | 0,5 g/l |

Ähnlich gute Ergebnisse erzielt man bei Einsatz von:

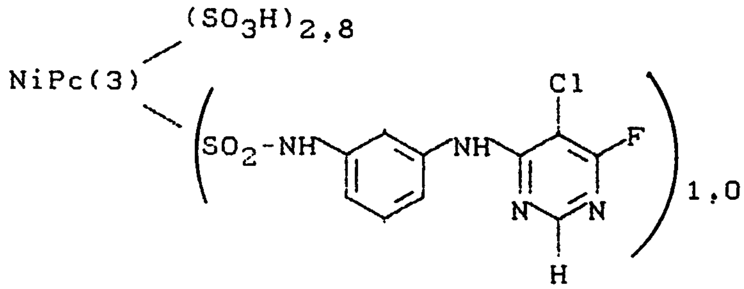

II)

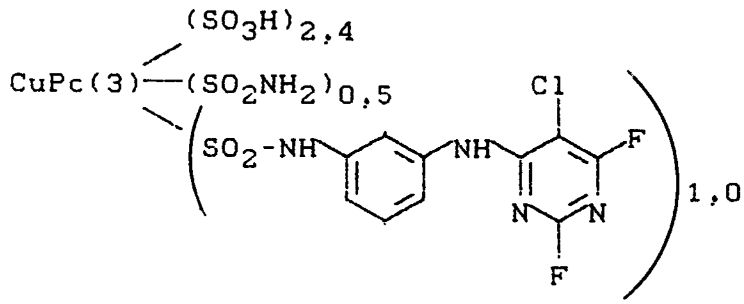

III)

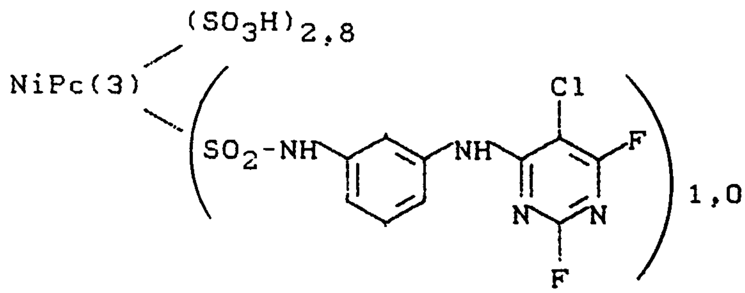

IV)

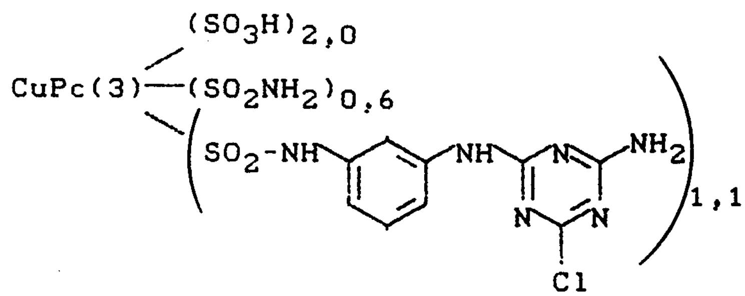

V)

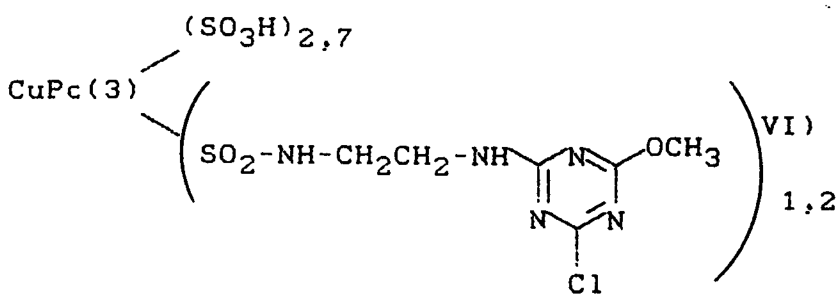

VI)

## Patentansprüche

**1.** Feste Präparationen von Reaktivfarbstoffen der Formel

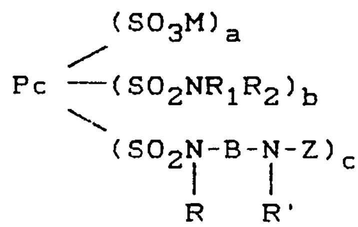

worin

Pc = Rest eines Kupfer- oder Nickelphthalocyanins

$R^1$, $R^2$ = H, gegebenenfalls substituiertes $C_1$-$C_4$-Alkyl oder zusammen gegebenenfalls ein oder mehrere Heteroatome enthaltender 5- oder 6-Ring

R', R = H, gegebenenfalls substituiertes Alkyl,

B = Brückenglied, gegebenenfalls substituiertes oder durch wenigstens ein Heteroatom unterbrochenes $C_1$-$C_6$-Alkylen oder gegebenenfalls substituiertes Phenylen

a = 1,0 bis 3,0,

b = 0 bis 1,2

c = 0,5 bis 2,0.

M = H, $NH_4$, Li, Na,K

Z = heterocyclischer Rest,

wobei die Reste $R^1$ und $R^2$ sowie R und R' unabhängig voneinander die angegebene Bedeutung besitzen,

dadurch gekennzeichnet, daß die Präparationen, 5 bis 15 Gew.-% eines säurebindenden Mittels enthalten.

**2.** Feste Präparationen gemäß Anspruch 1, dadurch gekennzeichnet, daß das säurebindende Mittel LiOH, NaOH, KOH, $Li_2CO_3$, $Na_2CO_3$ oder $K_2CO_3$ ist.

**3.** Feste Präparationen nach Anspruch 1, dadurch gekennzeichnet, daß das säurebindende Mittel $Na_2CO_3$ ist.

**4.** Feste Präparationen gemäß wenigstens einem der vorhergehenden Ansprüche, dadurch gekennzeichnet, daß Z ein Pyrimidin oder Triazinrest ist, der mit wenigstens einem Halogenatom substituiert ist.

**5.** Feste Präparationen gemäß wenigstens einem der vorhergehenden Ansprüche, dadurch gekennzeichnet, daß der Reaktivfarbstoff einer der folgenden Formeln entspricht

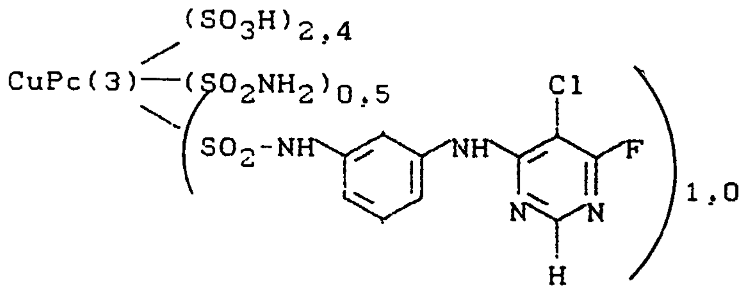

I)

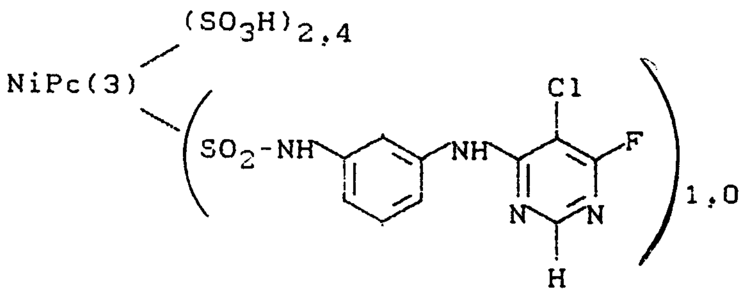

II)

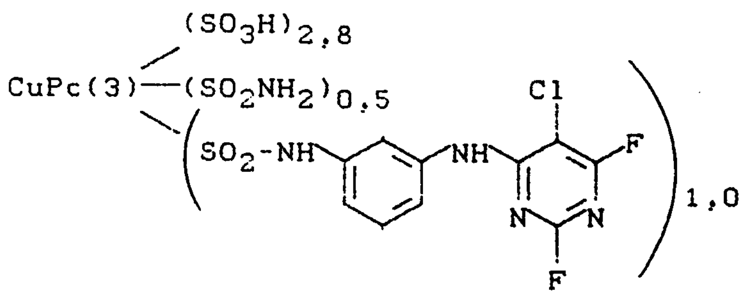

III)

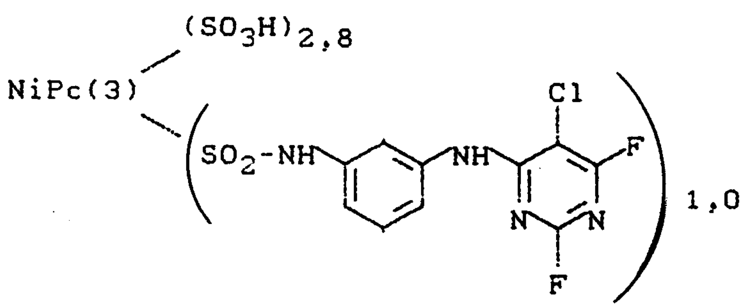

IV)

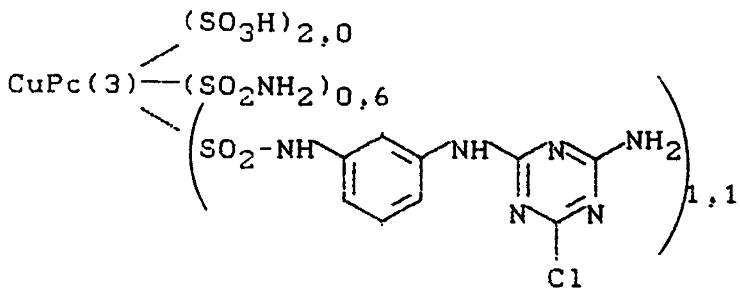

V)

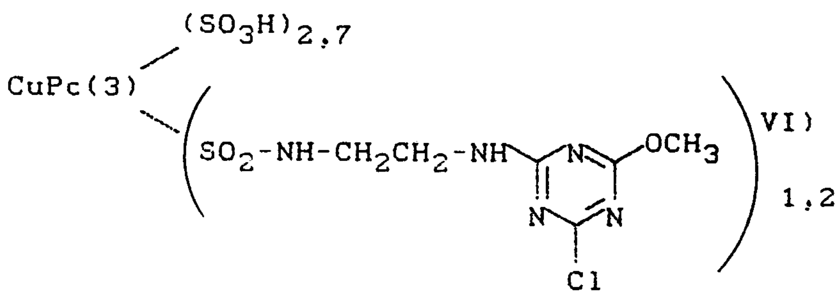

VI)

Europäisches Patentamt

# EUROPÄISCHER RECHERCHENBERICHT

Nummer der Anmeldung

EP 92 10 6850
Seite 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | GB-A-880 393 (CIBA LTD.)<br>* Seite 1, Spalte 1, Zeile 9 - Seite 1, Spalte 2, Zeile 59 *<br>--- | 1 | C09B67/24 |
| X | CH-A-482 000 (SANDOZ AG)<br>* Spalte 1, Zeile 1 - Zeile 40 *<br>* Spalte 7, Zeile 23 - Spalte 8, Zeile 22 *<br>* Spalte 8, Zeile 67 - Spalte 9, Zeile 9 *<br>--- | 1-3 | |
| X | DE-B-1 127 324 (CIBA AG)<br>* Spalte 1, Zeile 29 - Spalte 2, Zeile 44; Ansprüche *<br>--- | 1 | |
| D,A | US-A-4 802 888 (SANDEFUR ET. AL.)<br>* Zusammenfassung *<br>* Spalte 3, Zeile 35 - Zeile 42 *<br>--- | 1,2 | |
| A | WPIL, FILE SUPPLIER, AN=85-321670 [51], Derwent Publications Ltd. , London, GB; &JP-A-60-226559 (Nippon Kayaku KK) 11-11-1985 * Zusammenfassung *<br>--- | 1-3 | **RECHERCHIERTE SACHGEBIETE (Int. Cl.5 )** |
| A | EP-A-0 024 654 (CIBA-GEIGY)<br>* Seite 1, Zeile 18 - Seite 2, Zeile 6 *<br>* Seite 3, Zeile 30 - Seite 4, Zeile 4 *<br>* Seite 5, Zeile 13 - Zeile 22 *<br>--- | 1-3 | C09B |
| A | EP-A-0 255 890 (BAYER)<br>* Seite 2, Zeile 10 - Zeile 12 *<br>* Seite 3, Zeile 10 - Zeile 15 *<br>* Seite 10, Zeile 48 - Zeile 49 *<br>* Seite 11, Zeile 9 *<br>* Seite 11, Zeile 15 - Zeile 16 *<br>--- | 1 | |
| A | FR-A-2 388 027 (CIBA-GEIGY)<br>* Seite 2, Zeile 16 - Zeile 22 *<br>* Seite 3, Zeile 13 *<br>* Seite 3, Zeile 38 *<br>* Seite 4, Zeile 29 - Zeile 38 * | 1-3 | |

**Der vorliegende Recherchenbericht wurde für alle Patentansprüche erstellt**

| Recherchenort | Abschlußdatum der Recherche | Prüfer |
|---|---|---|
| DEN HAAG | 24 JULI 1992 | KETTERER M. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)

Europäisches Patentamt

# EUROPÄISCHER RECHERCHENBERICHT

Nummer der Anmeldung

EP 92 10 6850
Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| | ----- | | |

RECHERCHIERTE SACHGEBIETE (Int. Cl.5 )

Der vorliegende Recherchenbericht wurde für alle Patentansprüche erstellt

| Recherchenort | Abschlußdatum der Recherche | Prüfer |
|---|---|---|
| DEN HAAG | 24 JULI 1992 | KETTERER M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)